Europäisches Patentamt

European Patent Office

Office européen des brevets

(11) Numéro de publication: **0 265 343 B1**

(12) **FASCICULE DE BREVET EUROPEEN**

(45) Date de publication de fascicule du brevet: **07.10.92**   (51) Int. Cl.⁵: **C12G  1/06, B67C 7/00**

(21) Numéro de dépôt: **87402359.1**

(22) Date de dépôt: **21.10.87**

(54) Machine multifonctionnelle compacte pour le traitement de contenants tels que bouteilles.

(30) Priorité: **22.10.86 FR 8614675**

(43) Date de publication de la demande:
**27.04.88 Bulletin  88/17**

(45) Mention de la délivrance du brevet:
**07.10.92 Bulletin  92/41**

(84) Etats contractants désignés:
**DE ES IT**

(56) Documents cités:
**FR-A- 1 163 219**
**FR-A- 2 564 081**

(73) Titulaire: **ETABLISSEMENTS PERRIER S.A.**
**3 Rue Fernand Lafont**
**F-07160 Le Cheylard(FR)**

(72) Inventeur: **Perrier, René**
**3 Rue Fernand Lafont**
**F-07160 Le Cheylard(FR)**
Inventeur: **Perrier, Gérard**
**3 Rue Fernand Lafont**
**F-07160 Le Cheylard(FR)**

(74) Mandataire: **Bouju, André et al**
**Cabinet Bouju Derambure (Bugnion) S.A.**
**B.P. 6250**
**F-75818 Paris Cédex 17(FR)**

Rank Xerox (UK) Business Services

# Description

La présente invention concerne une machine multifonctionnelle compacte, capable de soumettre en continu des contenants et/ou leur contenu à deux ou plusieurs opérations successives.

On connaît d'après le FR-A- 2 564 081 une telle machine dans laquelle les contenants sont amenés par un premier dispositif de transfert côté entrée à un carrousel à passages multiples où ils effectuent un premier passage pour y subir une première opération, puis par un second dispositif de transfert côté sortie où ils sont conduits à un dispositif intermédiaire de transfert qui les ramène au premier dispositif de transfert côté entrée et de celui-ci au carrousel où, dans un autre passage sur ce dernier, ils subissent une autre opération. Les contenants ayant subi les opérations prévues sont évacués par le second dispositif de transfert côté sortie.

Selon ce document, les contenants arrivant à la machine sont directement remis au dispositif de transfert côté entrée par un convoyeur arrivant tangentiellement à ce dispositif de transfert rotatif. Le dispositif intermédiaire de transfert est constitué par un carrousel qui met à profit le trajet de retour des contenants depuis la sortie du carrousel à passages multiples vers l'entrée de celui-ci pour effectuer sur les contenants un traitement intermédiaire.

Toutefois, lorsque les contenants sont des bouteilles traitées selon la méthode champenoise notamment, les opérations successives de vidange (prélèvement d'une partie du contenu de la bouteille) dosage (injection d'une liqueur dans la bouteille) et mise à niveau (injection dans la bouteille d'un complément pour que son niveau de remplissage soit très précis) sont précédées d'une opération de dégorgeage au cours de laquelle la bouteille, dont le goulot a été réfrigéré, est décapsulée et un glaçon emprisonnant des impuretés est éjecté par la pression régnant dans la bouteille. Cette opération de dégorgeage prend de la place selon la longueur de la chaine. Il faut même un certain trajet libre entre la dégorgeuse et la machine apte à réaliser les opérations suivantes, de façon que les bouteilles défectueuses n'ayant pu être débouchées automatiquement lors du dégorgeage soient, si possible, retirées de la chaine avant d'attendre les postes de travail suivants. De toute façon, il est impossible qu'un poste de dégorgeage soit immédiatement adjacent à des postes effectuant d'autres opérations car le dégorgeage s'accompagne de projections salissantes. Autrement dit, parmi une série d'opérations, ce n'est pas toujours l'opération intermédiaire qu'il est le plus judicieux d'effecteur sur un carrousel distinct.

Le but de l'invention est ainsi de remédier à ces inconvénients et plus généralement de réduire la longueur des chaînes de traitement des contenants.

Suivant un premier aspect de l'invention la machine multifonctionnelle compacte, capable de soumettre en continu des contenants et/ou leur contenu à au moins trois opérations successives au moyen d'un premier et d'un second carrousel montés sur un bâti commun, dans laquelle les contenants sont amenés par un premier dispositif de transfert côté entrée au second carrousel où ils effectuent un premier passage pour y subir une première opération, puis en passant par un second dispositif de transfert côté sortie sont ramenés au premier dispositif de transfert côté entrée et de celui-ci au second carrousel où, dans un autre passage sur ce dernier, ils subissent une autre opération, tandis que les contenants ayant subi les opérations prévues sont évacués par le second dispositif de transfert côté sortie, est caractérisée en ce que les contenants ramenés au premier dispositif de transfert côté entrée passent par un dispositif intermédiaire de transfert distinct du premier carrousel et en ce que, avant d'atteindre la première fois le dispositif de transfert côté entrée, les contenants passent par le premier carrousel sur lequel ils subissent une opération préalable, ce premier carrousel délivrant les contenants au dispositif intermédiaire de transfert en une région de celui-ci située, relativement à son trajet de transfert, en aval du dispositif de transfert côté sortie et en amont du dispositif de transfert côté entrée

Ainsi, dans la machine, c'est la première opération, par exemple le dégorgeage, qui est effectuée sur un carrousel distinct. Par rapport à une installation classique qui aurait nécessité deux machines séparées le long de la chaîne, une place considérable est gagnée dans le sens de la longueur de la chaîne. Le premier carrousel délivre les contenants qu'il a traités au premier dispositif de transfert côté entrée à travers le dispositif intermédiaire de transfert. Cette apparente complication du trajet des contenants est en fait très avantageuse car elle permet une disposition beaucoup plus compacte de l'ensemble.

Suivant un second aspect de l'invention, la machine multifonctionnelle compacte, comprenant un bâti, des moyens pour soumettre en continu des contenants en mouvement tels que des bouteilles et/ou leur contenu, à au moins deux opérations successives dont l'une est une opération de vidange par un dispositif à canule d'aspiration capable de pénétrer dans le contenant, est caractérisée en ce qu'elle comprend en outre des moyens portés par le bâti pour soumettre préalablement les contenants à une opération de débouchage-dégorgeage, des moyens portés par le bâti pour transférer les contenants depuis les moyens pour soumettre les contenants à une opération de débouchage-dégorgeage vers les moyens pour soumettre les contenants auxdites opérations successives, et des moyens détecteurs sensibles à la position du dispositif à canule d'aspiration à un certain stade du mouvement des contenants pour commander un dispositif de sécurité lorsque le dispositif à canule d'aspiration est détecté en une position témoignant de l'impossiblité d'introduire la canule dans le contenant.

Ainsi, on parvient à une compacité remarquable selon la direction longitudinale de la chaîne de traitement, et le problème des bouteilles qui n'ont pas été débouchées lors du dégorgeage est résolu par la présence des moyens détecteurs qui commandent le fonctionnement d'un dipositif de sécurité (alarme et/ou arrêt de la machine) lorsqu'il est impossible d'introduire dans la bouteille la canule d'aspiration pour effectuer la vidange. On évite ainsi de manière systématique les risques de détérioration et/ou de salissure lors des opérations ultérieures, plus délicates, de dosage et de mise à niveau.

D'autres particularités et avantages de l'invention ressortiront encore de la description ci-après.

Aux dessins annexés, donnés à titres d'exemples non limitatifs :

- la figure 1 est un schéma en plan d'une machine selon l'invention ;
- la figure 2 est une vue schématique en perspective de la machine de la figure 1; et
- les figures 3 et 4 sont des vues schématiques en perspective partielle de la doseuse de la figure 2, lors de la vidange d'une bouteille convenablement dégorgée et respectivement dans la situation où la canule d'aspiration ne peut être introduite dans une bouteille n'ayant pu être débouchée lors du dégorgeage.

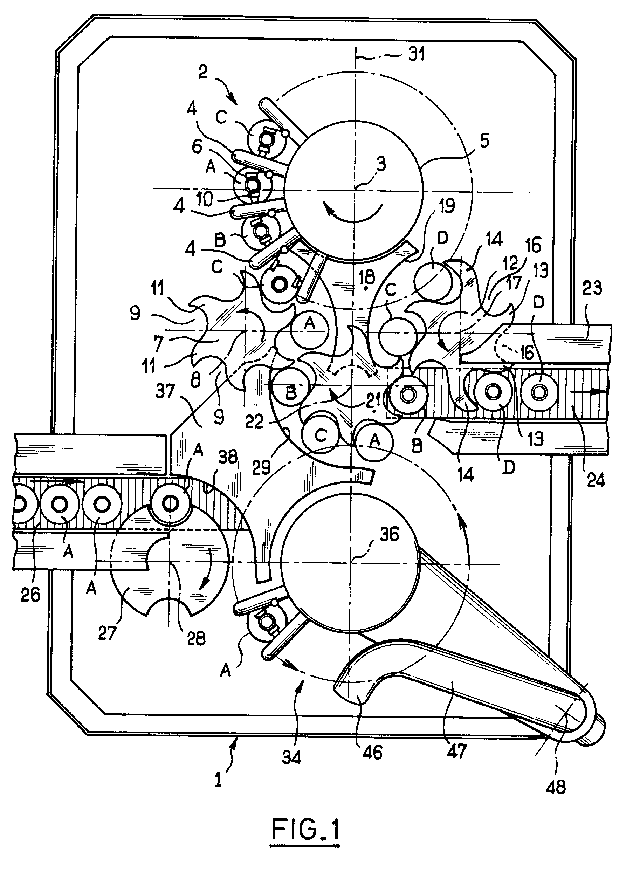

Dans l'exemple représenté à la figure 1, la machine comprend un bâti 1 dont le plateau supérieur porte un carrousel de dosage 2 entraîné en rotation selon un axe vertical 3. La machine est plus particulièrement destinée au traitement des bouteilles de champagne et assure les opérations de vidange (prélèvement d'une partie du contenu de la bouteille), dosage (injection d'une liqueur dans la bouteille) et mise à niveau (injection d'un complément dans la bouteille pour que son niveau de remplissage soit très précis). A cet effet, un tronc central 5 du carrousel 2 porte sur son pourtour des doigts 4 dirigés radialement vers l'extérieur et définissant entre eux 3n postes de traitement (12 postes dans l'exemple) destinés chacun à recevoir une bouteille A, B, C par pincement de son goulot au moyen d'une pince formée par l'extrémité d'un levier 6 et une pièce de contre-appui 10 portés respectivement par les deux doigts 4 adjacents à chaque poste.

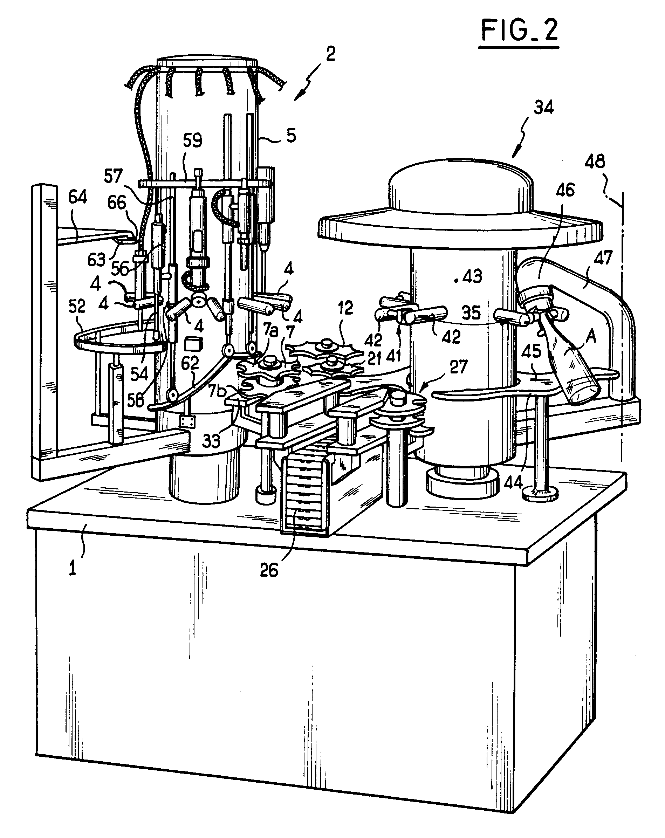

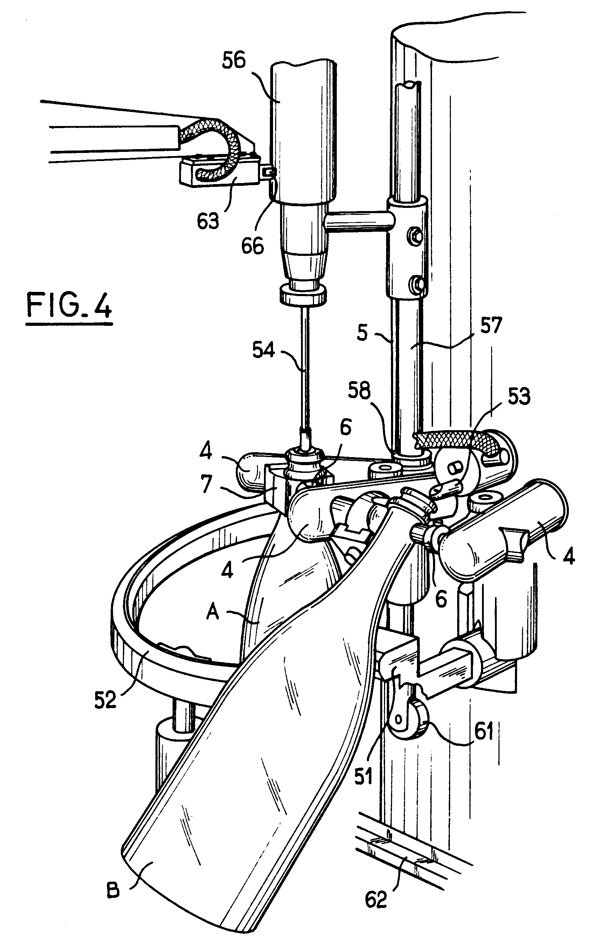

Les postes précités sont répartis en successions répétitives d'une poste de vidange (bouteille A), un poste de dosage (bouteille B) et un poste de mise à niveau (bouteille C). Ces postes seront décrits plus en détail en référence aux figures 2 à 4.

Le carrousel 2 est alimenté en bouteilles à traiter par un dispositif de transfert côté entrée, constitué par une étoile 7 montée dans un plan horizontal en position fonctionnellement tangente au carrousel 2. L'étoile d'entrée est entraînée en rotation selon un axe vertical B, à une vitesse angulaire qui est synchronisée avec celle du carrousel 2 de manière que la vitesse de défilement des alvéoles 9 définis entre les branches 11 de l'étoile 7 soit égale à la vitesse de défilement des postes de traitement du carrousel. Lorsque des bouteilles sont amenées par l'étoile 7 à un poste de travail du carrousel, la pince de ce poste de travail se ferme sur le goulot de cette bouteille qui est ainsi emmenée par le carrousel.

Un dispositif de transfert côté sortie, constitué par une étoile de sortie 12, est monté dans un plan horizontal en position fonctionnellement tangente au carrousel 2. L'étoile de sortie 12 définit entre ses branches 13, 14 3p alvéoles 16 (6 alvéoles dans l'exemple). Elle est entraînée en rotation autour d'un axe vertical 17 de manière que la vitesse de défilement des alvéoles 16 soit égale à la vitesse de défilement des postes de traitement du carrousel. Lorsque chaque bouteille véhiculée par le carrousel 2 se trouve face à l'étoile de sortir 12, la pince qui la retient s'ouvre en même temps que la bouteille se loge dans l'un des alvéoles 16 de l'étoile de sortie, à la suite de quoi cette bouteille est entraînée par l'étoile de sortie. Pour cela, la bouteille est guidée par une plaque de guidage 18 dont un bord de guidage 19 est en forme de segment de cercle centré sur l'axe 17 de manière à limiter radialement vers l'extérieur la trajectoire des bouteilles emmenées par l'étoile 12.

Les étoiles 7 et 12 tournent dans le même sens qui est contraire au sens de rotation du carrousel 2.

L'étoile 12 comprend deux branches 14 diamétralement opposées, relativement longues et recourbées vers l'avant relativement au sens de rotation, et quatre branches 13 plus courtes. En ce qui concerne les bouteilles quittant le carrousel 2, on appelle B les bouteilles venant de subir la vidange, C les bouteilles venant de subir le dosage, et D les bouteilles venant de subir la mise à niveau. En d'autres termes les bouteilles qui s'appelaient A, B, C au début de leur trajet sur le carrousel sont devenues respectivement des bouteilles B, C, D. Sur l'étoile 12, les bouteilles B et C sont poussées par une branche 13, tandis que les bouteilles D sont poussées par une branche 14 plus longue. Les bouteilles B et C sont remises par l'étoile 12 à un dispositif intermédiaire de transfert 21, ou étoile de transfert, qui est monté dans un plan horizontal et entraîné en rotation selon un axe vertical 22 en sens opposé au sens de rotation des étoiles 7 et 12. L'étoile de transfert 21 est fonctionnellement tangente aux étoiles 7 et 12. Le fond des alvéoles 16 de l'étoile 12 destinés à recevoir des bouteilles B et C peut être muni de moyens élastiques non représentés,agissant radialement vers l'extérieur, pour favoriser le transfert des bouteilles B et C sur l'étoile 21 dès qu'elles ont dépassé l'extrémité du bord de guidage 19.

De tels moyens élastiques ne sont pas prévus au fond des alvéoles 16 destinés aux bouteilles D de sorte que celles-ci, contrairement aux bouteilles B et C, sont emmenées par l'étoile 12 au-delà de la ré gion de tangence avec l'étoile 21, et ne quittent l'étoile 12 que lorsqu'elles rencontrent une plaque de guidage 23 longeant un convoyeur d'évacuation 24 s'étendant sous l'étoile 12, en direction tangentielle relativement à celle-ci.

La vitesse de rotation de l'étoile de transfert 21 est telle que la vitesse de défilement des alvéoles de cette étoile est égale à la vitesse de défilement des alvéoles des étoiles 7 et 12. Ainsi, chaque alvéole de l'étoile 21 qui vient correspondre avec un alvéole de l'étoile 12 occupé par une bouteille D quitte à vide la région de tangence avec l'étoile 12.

Les éléments qui viennent d'être décrits sont également visibles à la figure 2 dans laquelle on peut voir que chaque étoile 7, 12, 21 est constituée de deux étoiles élémentaires superposées, par exemple 7a et 7b, destinées à mieux répartir la poussée sur chaque bouteille. La figure 2 permet également de distinguer une plaque de sol 33 qui est fixée sous le trajet déterminé pour les bouteilles par les étoiles, de manière à supporter les bouteilles le long de ce trajet.

Dans les alvéoles laissés libres par l'étoile 12, sont successivement introduites les bouteilles A qui arrivent à la machine par un convoyeur d'entrée 26 qui s'étend parallèlement au convoyeur 24 mais se trouve, relativement à ce dernier, décalé latéralement en direction opposée au carrousel 2. La direction du convoyeur d'entrée 26 est tangente à celle d'un disque cadenceur 27 monté en rotation autour d'un axe vertical 28 et qui comporte sur son pourtour des alvéoles 29 capables de recevoir successivement les bouteilles A pour les délivrer à un carroussel de débouchage-dégorgeage 34 qui est porté par le même bâti 1 que le carrousel 2 et qui est entraîné en rotation autour d'un axe vertical 36 en sens opposé au sens de rotation de l'étoile de transfert 21 et du disque cadenceur 27, auxquels ledit carrousel 34 est fonctionnellement tangent. Il est prévu entre le disque 27 et l'étoile 21 une plaque de guidage 37 présentant deux bords de guidage opposés en secteurs de cercle 38 et 39 qui guident les bouteilles dans leurs trajets curvilignes lorsqu'elles sont emmenées respectivement par le disque 27 et par l'étoile 21. Pour transférer les bouteilles du convoyeur 26 au carrousel de dégorgeage 34, le disque 27 infléchit la trajectoire des bouteilles en direction opposée au carrousel 2. A l'issue de ce trajet curviligne, le goulot de chaque bouteille A est saisi par une pince 41 (figure 2) portée par des doigts 42 fixés à un tronc cylindrique 43 du carrousel 34, de manière à saillir radialement vers l'extérieur relativement à ce tronc. Les pinces 41 et les doigts 42 sont analogues aux pinces 6, 10 et aux doigts 4 du carrousel 2 (figure 1).

Les bouteilles A sont ainsi entraînées en rotation par le carrousel 34 et leur partie inférieure rencontre le bord extérieur 44 d'une plaque de guidage 46 (figure 2), de manière à incliner les bouteilles A. Ce mouvement d'inclinaison de chaque bouteille A amène le bord de la capsule fermant la bouteille en prise avec une barrette de décapsulage (non représentée mais classique) de manière à ôter la capsule. Au même moment, le goulot arrive en face de l'extrémité d'aspiration 46 d'une trompe d'aspiration 47 qui est capable de pivoter autour d'un axe 48 pour suivre la bouteille pendant une partie de son trajet. Dès le décapsulage, la pression existant dans la bouteille A fait sortir de celle-ci un glaçon formé dans le goulot et emprisonnant des impuretés. Ce glaçon est aussitôt aspiré par la trompe 47. Ceci fait, la trompe 47 revient en position d'attente de la bouteille suivante.

De plus, le profil du bord 44 de la plaque 46 permet à la bouteille qui vient d'être dégorgée de reprendre sa position verticale. A la suite de cela, la bouteille A dégorgée arrive dans la région de tangence entre le carrousel 34 et l'étoile de transfert 21. La synchronisation est telle que la bouteille A vient occuper un alvéole de l'étoile 21 laissé libre par l'étoile 12, c'est-à-dire correspondant à la position d'une bouteille D sur l'étoile 12.

L'axe 3 du carrousel 2, l'axe 22 de l'étoile 21 et l'axe 36 du carrousel 34 sont dans un même plan perpendiculaire à la direction longitudinale des convoyeurs 24 et 26, tandis que l'axe du disque cadenceur 27 est décalé vers le côté entrée de la machine relativement à ce plan.

La vitesse de défilement des alvéoles 29 du disque 27 est la même que celle des postes de travail du carrousel 34 et celle des alvéoles de l'étoile 21. De plus, les postes de travail du carrousel 34 sont positionnés sur sa périphérie de manière à correspondre uniquement avec les alvéoles vides de l'étoile 21 dans la région de tangence mutuelle de l'étoile 21 et du carrousel 34. Cette région de tangence est située, relativement à la direction du transfert assuré par l'étoile 21, en aval de l'étoile de sortie 12 et en amont de l'étoile d'entrée 7. Ainsi, les alvéoles vides de l'étoile 21 sont ceux que se sont trouvés en correspondance avec un alvéole de l'étoile 12 occupé par une bouteille D. Comme on le voit à la figure 2, les postes de travail du carrousel 34 sont séparés par des intervalles dégagés 35, qui laissent libre passage aux bouteilles B et C emmenées par l'étoile 21 dans sa région de tangence avec le carrousel 34.

Sur le convoyeur 26, les bouteilles A forment une file en butée contre le disque 27, la première bouteille de cette file étant prélevée par le disque 27 chaque fois que passe un alvéole 29, et remise par le disque 27 au carrousel 34. Ensuite, les bouteilles A sont placées successivement par le carrousel 34 dans les alvéoles restés libres de l'étoile 21, de sorte que celle-ci délivre successivement à l'étoile 7 une bouteille A destinée à atteindre l'étoile 7 pour la première fois, une bouteille B ayant déjà subi la vidange, et une bouteille C ayant déjà subi la vidange et le dosage, puis de nouveau une bouteille A etc... Les positions angulaires de l'étoile 7 et du carrousel 2 sont synchronisées de façon que les bouteilles A, B, C soient remises par l'étoile 7 à des postes de travail correspondants du carrousel. Compte tenu de ce qui a été dit en ce qui concerne le tri effectué par l'étoile 12 à la sortie du carrousel, on comprendra que chaque bouteille effectue trois tours de carrousel, successivement à titre de bouteille A, puis de bouteille B puis de bouteille C, avant de quitter la machine en tant que bouteille D.

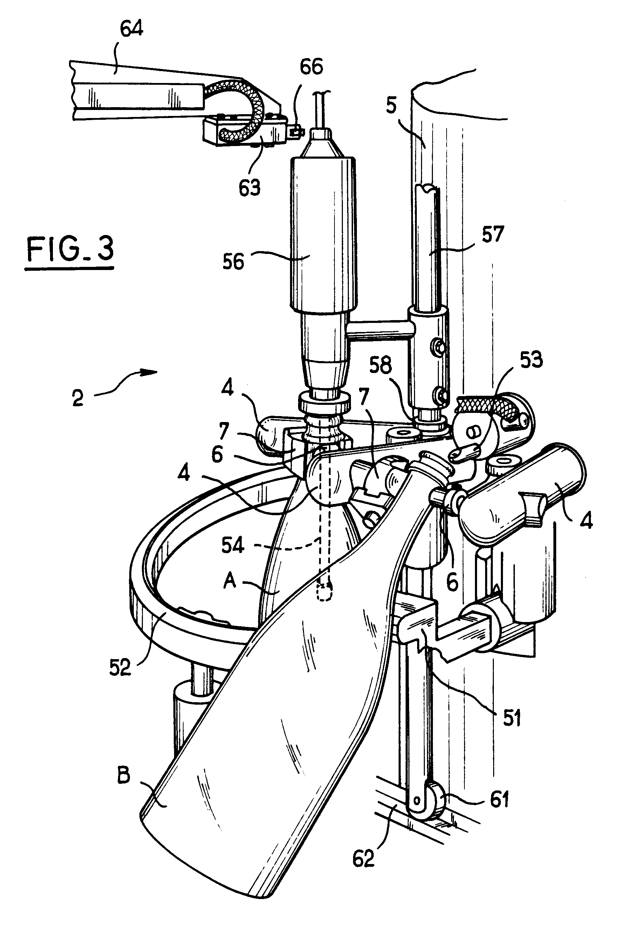

La figure 3 montre au premier plan une bouteille B qui a été repoussée en position oblique par un poussoir 51 porté par le tronc 5 du carrousel 2, de manière à s'appuyer ensuite sur une rampe de glissement 52 (voir aussi figure 2) montée fixement autour d'une partie du carrousel 2. La tête d'injection de liqueur est visible en 53 à la figure 3.

Au second plan de la figure 3, on distingue une bouteille A à travers le goulot de laquelle est enfoncée une canule d'aspiration 54 fixée à l'extrémité inférieure d'un dispositif de vidange 56, de structure connue, fixé latéralement à une tige élévatrice verticale 57 guidée à coulissement selon la direction verticale au moyen d'une douille 58 fixée au tronc 5, et d'un orifice de guidage supérieur pratiqué à travers une collerette 59 (figure 2) du tronc 5. A son extrémité inférieure, la tige 57 porte rotativement un galet 61 roulant sur une piste 62 fixe relativement au bâti 1. Comme le montre la figure 2, la piste 62 a une région haute au voisinage de l'étoile 7, puis une région descendante à partir de la région haute dans le sens de rotation du carrousel 2. Cette région descendante amène la canule 54 à pénétrer progressivement dans le goulot de la bouteille A

Un contacteur 63 (figure 3) est monté en position fixe au voisinage du trajet du dispositif 56 entraîné en rotation par le carrousel 2. Le contacteur 63 est porté par une potence 64 fixe relativement au bâti 1. D'après le profil de la came 62, la canule 54 est complètement enfoncée dans la bouteille A lorsque le dispositif 56 passe au droit du contacteur 63. Lorsque la canule 54 n'a rencontré aucun obstacle à cet enfoncement, le dispositif 56 passe à côté du contacteur 63 sans toucher le doigt de commande 66 de celui-ci. Par contre, si comme représenté à la figure 5, un bouchon en plastique (ou bidule) est resté en place sur la bouteille A, et que par conséquent le dégorgeage n'a pas eu lieu, la canule 54 ne peut pénétrer dans la bouteille A, ce qui a obligé le galet 61 à décoller de la piste 62, le dispositif 56, resté en position haute, actionne le doigt 66 du contacteur 63 lequel va déclencher l'arrêt de la machine après écoulement d'un certain temps suffisant pour permettre à la bouteille défectueuse d'être relâchée par la pince 6, 7 du carrousel 2, ce qui permet à un opérateur de la retirer facilement de la machine, puis de remettre celle-ci en marche.

## Revendications

1. Machine multifonctionnelle compacte, capable de soumettre en continu des contenants et/ou leur contenu à au moins trois opérations successives au moyen d'un premier (34) et d'un second (2) carrousel montés sur un bâti commun (1), dans laquelle les contenants sont amenés par un premier dispositif de transfert côté entrée (7) à un second carrousel (3) où ils effectuent un premier passage pour y subir une première opération, puis, en passant par un second dispositif de transfert côté sortie (12) sont ramenés au premier dispositif de transfert côté entrée (7) et de celui-ci au second carrousel (3) où, dans un autre passage sur ce dernier, ils subissent une autre opération, tandis que les contenants (D) ayant subi les opérations prévues sont évacués par le second dispositif de transfert côté sortie (12), caractérisée en ce que, les contenants (B, C) ramenés au premier dispositif de transfert côté entrée (7) passent par un dispositif intermédiaire de transfert (21) distinct du premier carrousel (34) et en ce que, avant d'atteindre la première fois le dispositif de transfert côté entrée (7), les contenants (A) passent par le premier carrousel (34) sur lequel ils subissent une opération préalable, ce premier carrousel (34) délivrant les contenants au dispositif intermédiaire de transfert (21) en une région de celui-ci située, relativement à son trajet de transfert, en aval du dispositif de transfert côté sortie (12) et en amont du dispositif de transfert côté entrée (7).

2. Machine selon la revendication 1, caractérisée en ce que les contenants (A) destinés à atteindre pour la première fois le dispositif de transfert côté entrée (7) sont délivrés au dispositif intermédiaire de transfert (21) en des emplacements laissés libres par le dispositif de transfert côté sortie (12) chaque fois qu'un contenant (D) est évacué.

3. Machine selon l'une des revendication 1 ou 2, caractérisée en ce que les contenants (A) sont délivrés au premier carrousel (34) par l'intermédiaire d'un moyen cadenceur (27).

4. Machine selon la revendication 3, caractérisée en ce que le moyen candenceur est un élément rotatif (27) présentant sur son pourtour des alvéoles (29) destinés à recevoir chacun un contenant (A) et à l'entraîner selon une trajectoire courbe se terminant de manière sensiblement tangente à la trajectoire définie pour les contenants par le premier carrousel (34).

5. Machine selon l'une des revendications 1 ou 4, caractérisée en ce qu'un plan contenant les axes (36, 3) des deux carrousels (34, 2) est transversal à une direction d'arrivée des contenants (A) sur la machine et à une direction selon laquelle les contenants (D) sont évacués de la machine.

6. Machine selon l'une des revendications 1 à 5, caractérisée en ce que le premier carrousel (34) est un carrousel de dégorgeage des contenants (A), constitués par des bouteilles, et le deuxième carrousel (2) est un carrousel de vidange, dosage et mise à niveau.

7. Machine selon l'une des revendications 1 à 6, caractérisée en ce que le second carrousel (2) comprend, en des emplacements destinés à recevoir les contenants lors de leur premier passage, des moyens (54) mobiles pour pénétrer dans les contenants (A) à travers une ouverture de ceux-ci, et des moyens de sécurité (63) sensibles à la position des moyens mobiles (54) à un certain stade du trajet des emplacements précités, pour déclencher l'arrêt de la machine si les moyens mobiles sont dans une position témoignant de l'impossibilité de pénétrer dans un contenant (A).

8. Machine selon la revendication 7, caractérisé en ce que les moyens de sécurité (63) sont associés à une temporisation de façon à déclencher l'arrêt de la machine lorsque le contenant (A) n'ayant pas permis la pénétration des moyens mobiles (54) a été libéré par le second carrousel (2).

9. Machine selon l'une des revendications 1 à 8, caractérisé en ce que le second dispositif de transfert côté sortie (12) évacue les contenants (D) vers un convoyeur de sortie (24) parallèle mais décalé latéralement relativement à un convoyeur d'entrée (26) par lequel arrivent les contenants (A) destinés à passer sur le dispositif intermédiaire de transfert (21) pour atteindre pour la première fois le dispositif de transfert côté entrée (7).

10. Machine multifontionnelle compacte, comprenant un bâti (1), des moyens (2) pour soumettre en continu des contenants en mouvement, tels que des bouteilles, et/ou leur contenu, à un moins deux opérations successives dont l'une est une opération de vidange par un dispositif à canule d'aspiration (54) capable de pénéter dans le contenant (A), caractérisée en ce qu'elle comprend en outre, des moyens (34) portés par le bâti (1) pour soumettre préalablement les contenants (A) à une opération de débouchage-dégorgeage, des moyens (21) portés par le bâti (1), pour transférer les contenants (A) depuis les moyens (34) pour soumettre les contenants (A) à une opération de débouchage-dégorgeage vers les moyens (3) pour soumettres les contenants (A, B, C) auxdites opérations successives, et des moyens détecteurs (63) sensibles à la position du dispositif (56) à canule d'aspiration (54) à un certain stade du mouvement des contenants pour commander un dispositif de sécurité lorsque le dispositif (56) à canule d'aspiration (54) est détecté en une position témoignant de l'impossibilité d'introduire la canule (54) dans le contenant (A).

## Claims

1. Compact multifunction machine which is capable of continuously subjecting containers and/or their contents to at least three successive operations by means of a first (34) and a second (2) carrousel mounted on a common frame (1), in which the containers are moved by a first admission-side transfer device (7) to a second carrousel (3) on which they carry out a first transit in order to undergo a first operation thereon and then, by passing through a second delivery-side transfer device (12), are returned to the first admission-side transfer device (7) and from this latter to the second carrousel (3) on which they undergo another operation during another transit on this latter whilst the containers (D) which have been subjected to the operations contemplated are discharged by the second delivery-side transfer device (12), characterized in that the containers (B, C) which are returned to the first admission-side transfer device (7) pass through an intermediate transfer device (21) which is separate and distinct from the first carrousel (34) and that, before reaching the admission-side transfer device (7) for the first time, the containers (A) pass through the first carrousel (34) on which they are subjected to a preliminary operation, the containers being delivered by said first carrousel (34) to the intermediate transfer device (21) in a region of this latter which is located relatively to its transfer path downstream of the delivery-side transfer device (12) and upstream of the admission-side transfer device (7).

2. Machine in accordance with claim 1, characterized in that the containers (A) which are intended to reach the admission-side transfer device (7) for the first time are delivered to the intermediate transfer device (21) at locations which are left free by the delivery-side transfer device (12) each time a container (D) is discharged.

3. Machine in accordance with claim 1 or claim 2, characterized in that the containers (A) are delivered to the first carrousel (34) via a time interval control means (27).

4. Machine in accordance with claim 3, characterized in that the time interval control means is a rotary element (27) provided with peripheral recesses (29) designed in each case to receive a container (A) and to move it along a curved path which terminates in substantially tangent relation to the path defined for the containers by the first carrousel (34).

5. Machine in accordance with either claim 1 or claim 4, characterized in that a plane containing the axes (36, 3) of the two carrousels (34, 2) is transverse to a direction of arrival of the containers (A) on the machine and to a direction in which the containers (D) are discharged from the machine.

6. Machine in accordance with one of claims 1 to 5, characterized in that the first carrousel (34) is a carrousel for removal of sediment from the containers (A) consisting of bottles and the second carrousel (2) is a carrousel for emptying, dosing and levelling.

7. Machine in accordance with one of claims 1 to 6, characterized in that the second carrousel (2) comprises, at locations which are intended to receive the containers during their first transit, movable means (54) for penetrating into the containers (A) through an opening of these latter, and safety means (63) which are sensitive to the position of the movable means (54) at a certain stage of the path of the locations aforementioned in order to initiate stopping of the machine if the movable means are in a position which indicates that there is no possibility of penetrating into a container (A).

8. Machine in accordance with claim 7, characterized in that the safety means (63) are associated with a timing system so as to initiate stopping of the machine when the container (A) which has not permitted penetration of the movable means (54) has been released by the second carrousel (2).

9. Machine in accordance with one of claims 1 to 8, characterized in that the second delivery-side transfer device (12) discharges the containers (D) towards an output conveyor (24) which is parallel but displaced laterally with respect to an input conveyor (26) on which the containers (A) arrive, said containers being intended to pass to the intermediate transfer device (21) so as to reach the admission-side transfer device (7) for the first time.

10. Compact multifunction machine comprising a frame (1), means (2) for continuously subjecting moving containers such as bottles and/or their contents to at least two successive operations, one of which is an operation involving emptying through a suction-tube device (54) which is capable of penetrating into the container (A), characterized in that it comprises in addition means (34) carried by the frame (1) for subjecting the containers (A) beforehand to an uncorking and sediment-removal operation, means (21) carried by the frame (1) for transferring the containers (A) from the means (34) for subjecting the containers (A) to an uncorking and sediment-removal operation to the means (3) for subjecting the containers (A, B, C) to said successive operations and detecting means (63) which are sensitive to the position of the device (56) having a suction tube (54) at a certain stage of the movement of the containers so as to initiate the operation of a safety device when the device (56) having a suction tube (54) is detected at a position which indicates that it is impossible to introduce the tube (54) into the container (A).

**Patentansprüche**

1.  Multifunktionelle kompakte Maschine zur kontinuierlichen Durchführung wenigstens dreier sukzessiver Operationen an Behältern und/oder ihrem Inhalt mittels eines ersten Karussells (34) und eines zweiten Karussells (2), die auf einem gemeinsamen Gestell (1) angeordnet sind, wobei die Behälter durch eine erste eingangsseitige Übergabevorrichtung (7) dem zweiten Karussell zugeführt werden, wo sie einen ersten Durchlauf ausführen, bei dem sie einer ersten Operation unterworfen werden und danach beim Durchlaufen einer zweiten ausgangsseitigen Übergabevorrichtung (12) der ersten eingangsseitigen Übergabevorrichtung und von dieser dem zweiten Karussell (2) wieder zugeführt werden, wo sie in einem weiteren Durchlauf einer anderen Operation unterworfen werden bis an den Behältern (D) die vorgesehenen Operationen vorgenommen worden sind und diese durch die zweite ausgangsseitige Übergabevorrichtung (12) abtransportiert werden, dadurch gekennzeichnet, daß die der ersten Übergabevorrichtung (7) wieder zugeführten Behälter (B,C) eine von dem ersten Karussell (34) verschiedene Zwischen-Übergabevorrichtung (21) durchlaufen und daß die Behälter (A), bevor sie der ersten eingangsseitigen Übergabevorrichtung (7) zum ersten Mal zugeführt werden, das erste Karussell (34) durchlaufen, wo sie einer vorbereiteten Operation unterworfen werden, wobei das erste Karussell (34) die Behälter auf die Zwischen-Übergabevorrichtung in einem Bereich leitet, der in Bezug auf den Übergabeweg stromabwärts von der ausgangsseitigen Übergabevorrichtung (12) und stromaufwärts der eingangsseitigen Übergabevorrichtung (7) liegt.

2.  Maschine nach Anspruch 1, dadurch gekennzeichnet, daß die Behälter (A), die zum ersten Mal der eingangsseitigen Übergabevorrichtung (7) zugeführt werden sollen, auf die Zwischen-Übergabevorrichtung (21) an solche Plätze geleitet werden, die durch die ausgangsseitige Übergabevorrichtung (12) dadurch vorgelassen worden sind, daß ein Behälter (D) abtransportier worden ist.

3.  Maschine nach Anspruch 1 oder 2, dadurch gekennzeichnet, daß die Behälter (A) dem ersten Karussell (34) über eine Takteinrichtung (27) zugeführt werden.

4.  Maschine nach Anspruch 3, dadurch gekennzeichnet, daß die Takteinrichtung durch ein rotierendes Element (27) gebildet ist, das auf seinem Umfang Kammern (29) zur Aufnahme jeweils eines Behälters (A) und zum Mitnehmen des Behälters (A) auf einem gekrümmten Weg aufweist, der im wesentlichen tangential zu der durch die Behälter auf dem ersten Karussell (34) definierten Umlaufbahn endet.

5.  Maschine nach Anspruch 1 oder 4, dadurch gekennzeichnet, daß die die Achsen (36,3) der beiden Karussells (34,2) aufweisende Ebene eine Richtung, in der die Behälter (A) zur Maschine transportiert werden, und eine Richtung schneidet, in der die Behälter (D) die Maschine verlassen.

6.  Maschine nach einem der Ansprüche 1 bis 5, dadurch gekennzeichnet, daß das erste Karussell (34) ein Spülkarussell für die Behälter (A), die aus Flaschen gebildet sind, ist und daß das zweite Karussell (2) ein Karussell zur Entleerung, Dosierung und Niveauregulierung ist.

7.  Maschine nach einem der Ansprüche 1 bis 6, dadurch gekennzeichnet, daß das zweite Karussell (2) an den Plätzen, die zur Aufnahme der Behälter während ihres ersten Durchlaufes vorgesehen sind, bewegliche Vorrichtungen (54) zum Eindringen in die Behälter (A) durch eine Öffnung der Behälter und Sicherheitseinrichtungen (63) aufweist, die die Position der beweglichen Vorrichtungen (54) an einer bestimmten Stelle des Umlaufweges der genannten Plätze detektiert, um das Stoppen der Maschine auszulösen, wenn sich die beweglichen Vorrichtungen in einer Position befinden, die die Unmöglichkeit des Eindringens in den Behälter (A) anzeigt.

8.  Maschine nach Anspruch 7, dadurch gekennzeichnet, daß die Sicherheitseinrichtungen (63) eine derartige Zeitsteuerung aufweisen, daß der Maschinenstop ausgelöst wird, wenn der Behälter (A), der das Eindringen der beweglichen Vorrichtung (54) nicht erlaubt hat, von dem zweiten Karusselll (2) freigegeben wird.

9.  Maschine nach einem der Ansprüche 1 bis 8, dadurch gekennzeichnet, daß die zweite, ausgangsseitige Übergabevorrichtung (12) die Behälter (D) auf eine Abtransporteinrichtung (24) leitet, die parallel, aber seitlich versetzt zu einer Zuführeinrichtung (26) angeordnet ist, über die die Behälter (A) ankommen, die die Zwischen-Übergabevorrichtung (21) durchlaufen sollen, um das erste Mal auf die eingangsseitige Übergabevorrichtung (7) zu gelangen.

10. Multifunktionelle kompakte Maschine mit einem Gestell (1) und einer Einrichtung (2) zur kontinuierlichen Durchführung von wenigstens zwei sukzessiven Operationen an Behältern in Bewegung, wie z. B. Flaschen, und/oder an deren Inhalt, wobei eine der Operationen die Entleerung mit Hilfe eines Absaugrohres (54) ist, das in den Behälter (A) einführbar ist, gekennzeichnet durch

   - eine auf dem Gestell (1) befestigte Vorrichtung (34) zum vorhergehenden Ausführen einer Entkork-Spül-Operation an den Behältern (A),
   - einer auf dem Gestell (1) befestigten Einrichtung (21) zur Übergabe der Behälter (A) von der Einrichtung (34) zur Durchführung der Entkork-Spül-Operation auf die Einrichtung zur Durchführung der genannten sukzessiven Operationen an den Behältern (A,B,C) und
   - durch eine Detektionseinrichtung (63), die die Position der Einrichtung (56) mit dem Absaugrohr (54) an einer bestimmten Stelle der Bewegung der Behälter abtastet, um eine Sicherheitseinrichtung zu steuern, wenn die Einrichtung (56) mit dem Absaugrohr (54) in einer Position detektiert worden ist, die die Unmöglichkeit des Einführens des Absaugrohres (54) in den Behälter (A) anzeigt.

FIG.1

FIG.2

FIG. 3

FIG.4